# EUROPEAN PATENT SPECIFICATION

(11) **EP 2 732 614 B1**
(45) Date of publication and mention of the grant of the patent: **06.09.2017**
(21) Application number: 11733658.6
(22) Date of filing: 11.07.2011
(51) Int. Cl.: H04M 15/00, H04W 4/24, H04M 3/42

(54) **CHARGING ID CORRELATION IN AN IMS NETWORK**
KORRELATION VON VERRECHNUNGS-ID IN EINEM IMS-NETZWERK
CORRÉLATION D'ID DE FACTURATION DANS UN RÉSEAU IMS

(43) Date of publication of application: 21.05.2014
(73) Proprietor: Telefonaktiebolaget LM Ericsson (publ), 164 83 Stockholm (SE)
(72) Inventor: FORSBERG, Mikael, S-135 40 Tyresö (SE); DAHL, Jan, S-125 56 Älvsjö (SE); KARLSSON, Håkan, S-113 38 Stockholm (SE); OLSSON, John, S-132 31 Saltsjö-Boo (SE)
(74) Representative: Ericsson
(86) International application number: PCT/EP2011/061727
(87) International publication number: WO 2013/007291

(56) References cited:
- WO-A1-2009/078874
- WO-A2-01/91446
- CN-A- 1 773 919
- CN-A- 101 742 369
- US-A1- 2009 104 899
- US-A1- 2011 077 058
- US-A1- 2011 161 248
- "Digital cellular telecommunications system (Phase 2+); Universal Mobile Telecommunications System (UMTS); LTE; IP multimedia call control protocol based on Session Initiation Protocol (SIP) and Session Description Protocol (SDP); Stage 3 (3GPP TS 24.229 version 10.3.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP CT 1, no. V10.3.0, 1 May 2011 (2011-05-01), XP014065900,
- "Digital cellular telecommunications system (Phase 2+); Universal Mobile Telecommunications System (UMTS); LTE; Telecommunication management; Charging management; IP Multimedia Subsystem (IMS) charging (3GPP TS 32.260 version 10.4.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 5, no. V10.4.0, 1 June 2011 (2011-06-01), XP014066270,

## Description

### Technical Field

The present invention relates to correlation of the use of a charging identifier (ICID) in an IP Multimedia Subsystem (IMS) telecommunications network.

### Background

IP Multimedia Subsystem (IMS) is the technology defined by the Third Generation Partnership Project (3GPP) to provide IP Multimedia services over mobile communication networks. IMS provides key features to enrich the end-subscriber person-to-person communication experience through the use of standardised IMS Service Enablers, which facilitate person-to-person (client-to-client) communication services as well as person-to-content (client-to-server) services over IP-based networks. The IMS makes use of the Session Initiation Protocol (SIP) to set up and control calls or sessions between subscriber terminals (or between subscriber terminals and IMS network entities such as application servers). Whilst SIP was created as a subscriber-to-subscriber protocol, IMS allows operators and service providers to control subscriber access to services and to charge subscribers accordingly.

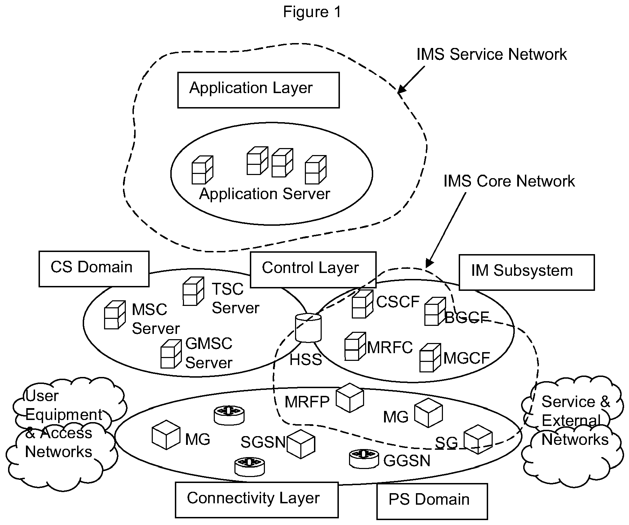

Figure 1 illustrates schematically how the IMS fits into the mobile network architecture in the case of a GPRS/PS access network (IMS can of course operate over other access networks). Call/Session Control Functions (CSCFs) operate as SIP proxies within the IMS. The Serving CSCF (S-CSCF) handles the provision of services to the user, while Application Servers (ASs) implement the IMS service functionality. Application Servers may be connected either as session end-points or "linked in" to a session by an S-CSCF. The S-CSCF is a SIP server, but performs session control as well, handles SIP registrations, and is in the path of all signaling messages, so that it can inspect every message in a session. It decides to which AS(s) the SIP message will be forwarded for the provision of services and it provides routing services.

The charging mechanisms for IMS sessions are either offline (post-paid) charging, using accounting messages, or online (pre-paid) charging, using credit control messages and procedures. For off-line charging the various IMS network entities that handle transactions act as charge triggering functions (CTFs) generating charging information which is sent to a Charging Data Function (CDF) over an Rf interface. For on-line charging, the IMS network entities communicate with an Online Charging System (OCS) over the Ro interface. The information collected by the CDF/OCS can then be used in whatever way the operator sees fit. The information collected in this way is categorized as charging information, but in fact it can be information relating to things other than charging (billing), such as a form of Deep Packet Inspection (DPI), statistics, security, traffic monitoring, etc. The following discussion and illustrative examples use offline charging, but the principles apply equally with regard to online charging.

In general SIP signals are directed between a pair of end points. In other words the address information provided by the sender in the signal header specifies the recipient end-point (e.g. in the form of a recipient uniform resource identifier, R-URI), and the signal is routed over the network to that end-point. However, there are a number of situations in which SIP signals are re-targeted to a different end-point. Examples of IMS services that involve retargeting include Communication Diversion (CDIV), Do Not Disturb, Communication Distribution, Flexible Alerting, and Conference.

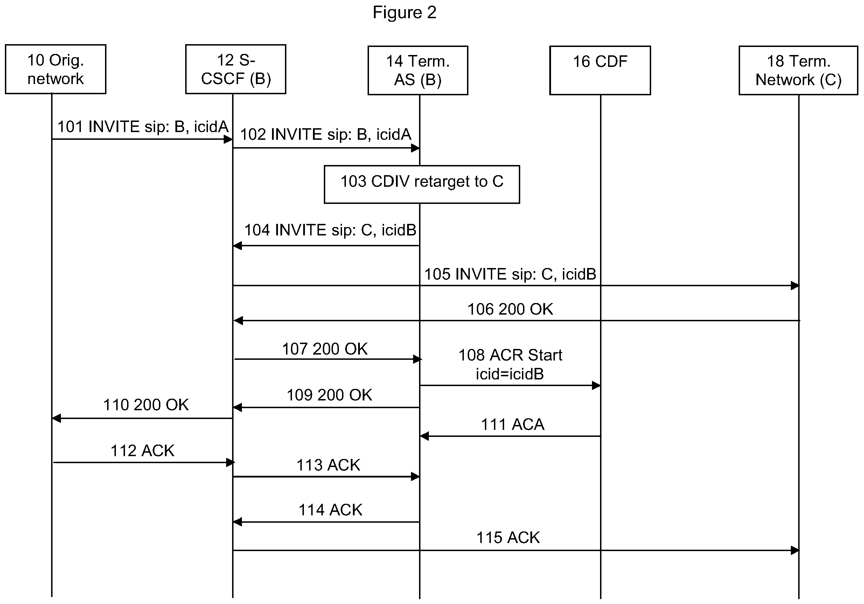

For example, the 3GPP technical specification TS 24.604 Communication Diversion defines how a user B that receives a communication (SIP INVITE) or message (SIP MESSAGE) is able to divert the communication to a new target, C. This is shown in Figure 2, where a SIP INVITE 101 is sent from an entity in an originating network 10 towards user B. The IMS network serving user B includes a S-CSCF 12 assigned to user B and an AS 14 providing a CDIV service. There is also a Charging Data Function 16. The S-CSCF 12 forwards the SIP INVITE 102 to B's terminating AS 14, which triggers 103 the CDIV to retarget the SIP INVITE to C. C is a user, or other entity in a terminating network 18. The CDIV procedure involves B's terminating AS 14 sending a new SIP INVITE 104 towards user C. The R-URI is changed by B's terminating AS 14 so that the S-CSCF 12 routes the SIP INVITE 105 towards C's terminating network 18.

When B's terminating AS 14 creates the new call leg on behalf of B - e.g. at Call Diversion - it generates a new IMS Charging Identifier (ICID) for the new call leg towards C. The new ICID value (icidB) is generated and placed in the P-Charging-Vector (PCV) header of the outgoing SIP INVITE 104. When this has been received, as acknowledged by the exchange of SIP 200 OK messages 106, 107, B's terminating AS 14 also uses the new ICID in an Accounting Request message (ACR) 108 sent to the CDF 16. The process is completed by the return of SIP 200 OK and acknowledgement (ACK) messages 109-115 between the entities.

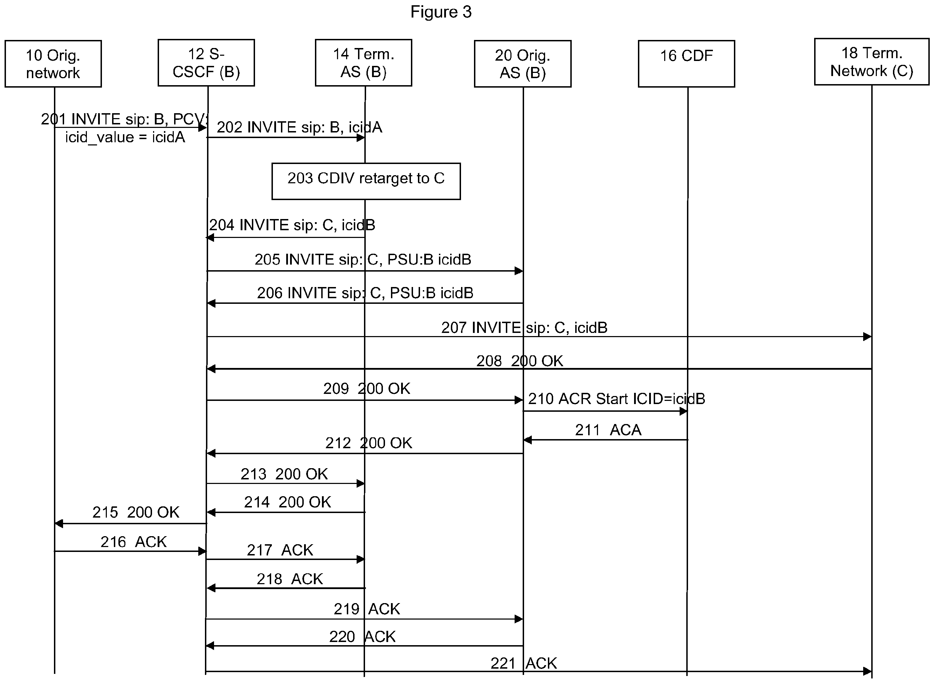

Figure 3 illustrates the procedure where ASs are chained. In other words services are being provided to user B by more than one AS. These services may include user B's originating services, such as Outgoing Communication Barring (OCB) for example, provided by B's originating AS. These originating services may be run after the CDIV service has been implemented by B's terminating AS 14. Alternatively, the operator may select to run B's originating services in B's originating AS by sending the retargeted INVITE to the S-CSCF, which then sends the retargeted INVITE to B's originating AS to perform B's originating services, such as OCB. Thus, in addition to the entities shown in Figure 2 and described above, there is an originating AS 20 serving user B. At steps 201 to 204, B's terminating AS 14 creates a new INVITE towards C, as described above for Figure 2 steps 101-104. However, in this scenario, the new call leg triggers originating services provided by B's originating AS 20. Thus, B's S-CSCF 12 sends the SIP INVITE 205 initially to B's originating AS 20, and only after it is returned 206, forwards it 207 to C's terminating network 18.

The SIP INVITE includes a P-Served-User header, PSU, which is inserted by B's S-CSCF 12, and is used by B's originating AS 20 to identify the served user because the R-URI in the INVITE is directed to C, and the P-Asserted-Identity is pointing at A. After communications are established, as indicated by the return of 200 OK messages 208, 209, B's originating AS 20 can send an ACR 210 to the CDF 16. This will include the ICID icidB that was included by B's terminating AS 14 in the INVITE 205 and in the INVITE 206 received at B's originating AS 20. The procedure is then completed with the exchange of acknowledgement/200 OK messages 211-221.

B's originating AS 20 does not have access to the received ICID (icidA in Figure 3) in the original INVITE 201. As a result, B's originating AS 20, when sending the ACR 210 providing charging data to the CDF 16, is unable to provide information that would enable the CDF 16 to correlate the charging data with the original SIP INVITE from A.

Note that in the Figure 2 scenario, it is possible that B's terminating AS 14 could be configured with the capability to include the ICID (icidA) from the INVITE 102 received by B as a cross-reference (Related icid) in the ACR 108. However, for the Figure 3 scenario this would not be possible, as B's originating AS 20 has not seen the original INVITE 202.

Thus, in situations where a new call leg is generated by an AS (or other network entity that performs a retargeting function) it is not always possible to correlate the charging information generated by the network entities serving the as they do not have access to the ICID value of the previous call leg.

Also, the ICID may be used for other purposes than just charging. For example, the ICID may be used in network tracing as the common identifier of a SIP session through the complete network. However, where there has been a retargeting it is not possible to correlate the leg between A and B with the leg between B and C because the ICID has changed when B's terminating AS has triggered a retargeting service such as CDIV.

US 2001/077058 discloses a method for providing handover of offline charging for an IMS session between a home IMS network and a visited IMS network. A global charging identifier (RCID) is assigned to the session (which takes place in a single call leg) to correlate the CDRs for the session.

US 2009/104899 discloses a method and node for communication diversion. The node is configured to receive a notification related to the incoming communication only if it matches a specific criteria.

### Summary

According to a first aspect, there is provided a method of correlating information relating to messages in a SIP session, according to claim 1. Embodiments also provide that the same procedure is adopted for multiple retargeting of the SIP message, whereby each retargeted SIP message has a reference to the ICID of the previous SIP message inserted. It is an advantage that the referenced ICIDs carried by retargeted SIP messages can be used to correlate the charging information for all call legs generated for the served user.

According to a second aspect there is provided an IMS network entity according to claim 12. The disclosure also relates to an IMS network entity configured to receive a message from another IMS network entity. The message comprises information relating to a SIP session and references to a plurality of associated ICIDs. The IMS network entity is configured to correlate the information with information received in other messages that comprise references one or more of the same ICIDs.

### Brief Description of the Drawings

Figure 1 illustrates schematically the integration of an IP Multimedia Subsystem into a 3G mobile communications system;
Figure 2 is a signal diagram illustrating a retargeting operation triggered by a Communication Diversion service in accordance with current procedures;
Figure 3 is a signal diagram illustrating a retargeting operation triggered by a Communication Diversion service involving chained application servers in accordance with current procedures;
Figure 4 is a signal diagram illustrating a retargeting operation triggered by a Communication Diversion service involving chained application servers in accordance with an embodiment described herein;
Figure 5 is a flow diagram illustrating steps that are carried out in accordance with embodiments described herein.

### Detailed Description

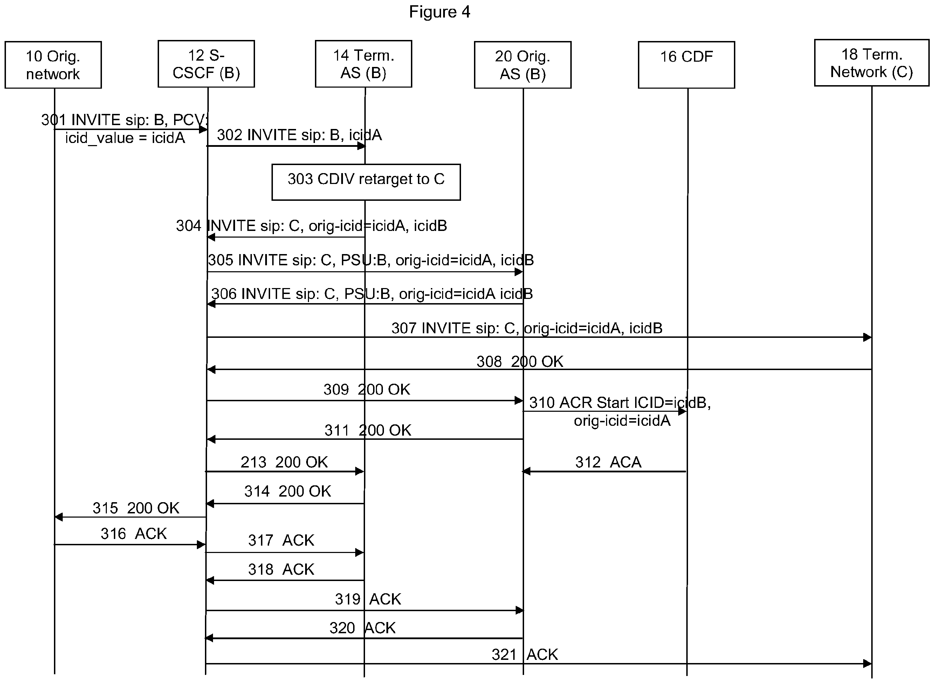

Figure 4 depicts the same CDIV operation involving chained application servers as shown in figure 2 and described above. At steps 301 to 303, an INVITE is received at B's terminating AS 14, as described above for Figure 2 steps 101-103 and Figure 3, steps 201-203. This triggers the CDIV function 303, and so B's terminating AS 14 retargets the INVITE by generating a new SIP INVITE 304 towards C. In addition to including the ICID icidB, B's terminating AS now also includes an originating ICID parameter, orig-icid , which is a reference to the ICID, icidA in the original INVITE received. Note that the orig-icid parameter is not itself an ICID of the SIP INVITE, as it is not specified in the ICID field (which now specifies icidB as the ICID). Now the INIVITEs 305 and 306 forwarded to and returned from B's originating AS 20 also include the orig-icid parameter, as does the INVITE 307 sent to C's terminating network.

However, in this scenario, the new call leg triggers originating services provided by B's originating AS 20. Thus, B's S-CSCF 12 sends the SIP INVITE 205 initially to B's originating AS 20, and only after it is returned 206, forwards it 207 to C's terminating network 18. After communications are established, as indicated by the return of 200 OK messages 308, 309, B's originating AS 20 can send an ACR 310 to the CDF 16. This will include not only the ICID icidB that was included by B's terminating AS 14 when it generated the INVITE 304, but also the orig-icid, icidA, that was also inserted by B's terminating AS 14 into the INVITE 304. The procedure is then completed with the exchange of acknowledgement/200 OK messages 311-321.

Accordingly, every time a network entity (e.g an AS) retargets a message, it not only includes the new ICID (icidB in the examples above) but also includes an orig-icid parameter that contains a reference to the original ICID (icidA) of the original message. This original ICID can then be inserted in the generated charging information for correlation purposes.

For a call that undergoes multiple retargeting (i.e. multiple diversions), the icid-value in the received message is used as the orig-icid value in the new outgoing message (the old orig-icid value in the received message is discarded) while a new icid-value is generated by the retargeting AS for the ICID in the new message. Thus every retargeted message includes both an ICID generated by the retargeting entity (e.g AS) as well as a reference to the ICID of the previous message that triggered the retargeting. In this way the ICID values can be used to correlate every message with its previous message, back to the originating message.

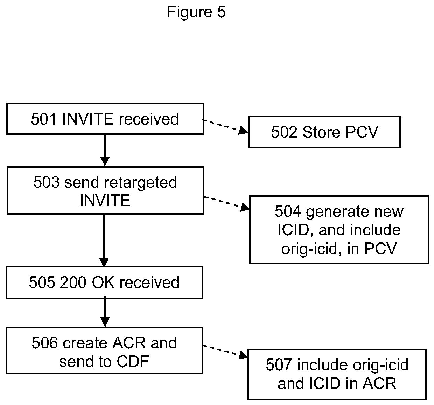

Figure 5 is a flow chart illustrating the steps that occur when B's terminating AS 14 retargets a call - i.e. creates a new call leg on behalf of B, e.g. at Call Diversion. At step 501 a SIP INVITE (or other SIP message) is received. The P-Charging-Vector (PCV) header is stored (502). As described above, at step 503 the INVITE is retargeted. This includes (504) generating a new ICID value and placing this in the P-Charging-Vector (PCV) header of the outgoing SIP INVITE. In addition to this, the ICID received in the incoming INVITE is also added to the outgoing SIP INVITE , e.g. as a new orig-icid parameter in the PCV header. At step 505 a SIP 200 OK is received. At step 506 the charging information is sent to the CDF. This includes (step 507) the orig-icid as well as the new ICID. In this example, the PCV header is used as an example of the transport mechanism for the reference to the original ICID, orig-icid. The syntax could be:

| | |
|---|---|
| P-Charging-Vector | = "P-Charging-Vector" HCOLON icid-value * (SEMI charge-params) |
| charge-params | = icid-gen-addr / orig-ioi / term-ioi / **orig-icid** / generic-param |
| icid-value | = "icid-value" EQUAL gen-value |
| icid-gen-addr | = "icid-generated-at" EQUAL host |
| orig-ioi | = "orig-ioi" EQUAL gen-value |
| term-ioi | = "term-ioi" EQUAL gen-value |
| **orig-icid** | **= "orig-icid" EQUAL gen**-**value** |

The terms shown in **bold text** are the new parameters.

The inclusion of the reference to the original ICID in the outgoing SIP message, and subsequently in messages (ACR) sent to the Charging Data system, makes it possible for the charging system to correlate the charging information for all call legs generated for the served user. One consequence of this is an improvement in the input data for rating decisions. For example, at call diversions an operator may decide to reduce or omit the setup fee for the new leg where this is a result of a retargeting service.

A further advantage is that it is now possible to perform a network trace from the originating user A to user C when user B's AS has performed a retarget to C as a result of, for example, CDIV. The ICID generated by user A's originating network is also available in C's terminating network in the form of the orig-icid parameter. This is not possible under current procedures regardless of whether there is chaining of ASs. In Figure 3, even if B's terminating AS 14 is capable of including a related icid parameter in the ACR, there is no way currently for C's terminating network to know or discover the original ICID in the INVITE from A.

## Claims

1. A method of correlating information relating to messages in a Session Initiation Protocol, SIP, session, the method comprising:
receiving, by a second user, from a first user (301, 501) a first SIP message for initiating a first new SIP session as a first call leg from the first user to the second user, the first SIP message including a first IMS Charging Identifier, ICID identifying the first call leg; **characterised by**:
retargeting (303, 503) the first SIP message to a third user by generating (304) a new call leg comprising sending a second SIP message for initiating a second new SIP session, the second SIP message including a second ICID identifying the second call leg;
inserting a reference to the first ICID into the second SIP message; and
correlating information relating to the first SIP session with information relating to the second SIP session based on the first ICID and the reference to the first ICID in the second SIP message.

2. The method of claim 1 wherein the retargeting (303, 503) of the first SIP message is performed at an Application Server (14) or other IMS network entity that performs a retargeting operation serving a user to which the first SIP message is directed.

3. The method of claim 1 or claim 2 further comprising retargeting the second SIP message by generating a third SIP message, inserting a reference to the second ICID into the third SIP message, and correlating information relating to the second and third SIP messages based on the second ICID and the reference to the second ICID in the third SIP message.

4. The method of claim 3 further comprising correlating information relating to the first and third SIP messages based on the first and second ICIDs and the references to the first and second ICIDs in the second and third SIP messages.

5. The method of claim 3 or claim 4 wherein the first SIP message is directed to a user and retargeting (303, 503) of the first SIP message is performed at a terminating Application Server, AS, (14) serving a user, while retargeting of the second SIP message is performed at an originating AS (20) serving the user.

6. The method of any preceding claim wherein the retargeting (303, 503) of the first and/or second SIP message comprises generating (304) the second/third SIP message as a SIP INVITE directed to a different user than the user to whom the first SIP message was directed.

7. The method of any preceding claim wherein the retargeting of the first and/or second SIP message (303, 503) comprises application of one of: a Communication Diversion, CDIV; a Do Not Disturb service; a Communication Distribution service; a Flexible Alerting service; a Conference service, or any other retargeting service.

8. The method of any preceding claim, wherein the information relating to the first, second or third SIP messages comprises charging information, the method further comprising forwarding (506) the charging information to a Charging Data Function, CDF, (16) or to an Online Charging System, OCS, together with the ICID and referenced ICID contained in the SIP message.

9. The method of claim 8 wherein the CDF (16) or OCS, to which the charging information is forwarded, correlates the charging information with other charging information received that includes a corresponding ICID or referenced ICID.

10. The method of any of claims 1 to 7 wherein correlating the information relating to the first, second or third SIP messages comprises performing a network trace using the ICIDs in the SIP messages.

11. The method of any preceding claim, wherein the first ICID is included in an ICID field of the first SIP message, the second ICID is included in an ICID field of the second SIP message, and the reference to the first ICID in the second SIP message is a parameter that is not specified in the ICID field of the second SIP message.

12. An IMS network entity configured to perform the method steps of claim 1.

13. The IMS network entity of claim 11 wherein the first ICID is included in an ICID field of the first SIP message, and the entity is configured to include the second ICID in an ICID field of the second SIP message, and to insert the reference to the first ICID in the second SIP message as a parameter that is not specified in the ICID field of the second SIP message.

14. The IMS network entity of claim 12 or claim 13, wherein the network entity is an Application Server (14, 20) providing a service that performs a retargeting function.

## Patentansprüche

1. Verfahren zum Korrelieren von Informationen bezüglich Nachrichten in einer Session Initiation Protocol, SIP, Sitzung, das Verfahren umfassend: Empfangen, durch einen zweiten Anwender, von einem ersten Anwender (301, 501) einer ersten SIP Nachricht zum Initialisieren einer ersten neuen SIP Sitzung als einen ersten Anrufzweig vom ersten Anwender zum zweiten Anwender, wobei die erste SIP Nachricht eine erste IMS Ladungskennung, ICID, enthält, die den ersten Anrufzweig identifiziert; **gekennzeichnet durch**: Umdirigieren (303, 503) der ersten SIP Nachricht zu einem dritten Anwender durch Erzeugen (304) eines neuen Anrufzweigs, umfassend ein Senden einer zweiten SIP Nachricht zum Einleiten einer zweiten neuen SIP Sitzung, wobei die zweite SIP Nachricht eine zweite ICID enthält, die den zweiten Anrufzweig identifiziert; Einfügen eines Verweises auf die erste ICID in die zweite SIP Nachricht; und Korrelieren von Informationen bezüglich der ersten SIP Sitzung mit Informationen bezüglich der zweiten SIP Sitzung basierend auf der ersten ICID und dem Verweis auf die erste ICID in der zweiten SIP Nachricht.

2. Verfahren nach Anspruch 1, wobei das Umdirigieren (303, 503) der ersten SIP Nachricht bei einem Anwendungsserver (14) oder anderen IMS Netzwerksinstanz ausgeführt wird, der bzw. die einen Umdirigierungsvorgang ausführt, der einen Anwender bedient, an den die erste SIP Nachricht gerichtet ist.

3. Verfahren nach Anspruch 1 oder Anspruch 2, des Weiteren umfassend ein Umdirigieren der zweiten SIP Nachricht durch ein Erzeugen einer dritten SIP Nachricht, Einfügen eines Verweises auf die zweite ICID in die dritte SIP Nachricht und Korrelieren von Informationen bezüglich der zweiten und dritten SIP Nachricht basierend auf der zweiten ICID und dem Verweis auf die zweite ICID in der dritten SIP Nachricht.

4. Verfahren nach Anspruch 3, des Weiteren umfassend ein Korrelieren von Informationen bezüglich der ersten und dritten SIP Nachricht basierend auf der ersten und zweiten ICID und den Verweisen auf die erste und zweite ICID in der zweiten und dritten SIP Nachricht.

5. Verfahren nach Anspruch 3 oder Anspruch 4, wobei die erste SIP Nachricht an einen Anwender gerichtet ist, und das Umdirigieren (303, 503) der ersten SIP Nachricht bei einem abschließenden Anwendungsserver, AS, (14), der einen Anwender bedient, ausgeführt wird, während ein Umdirigieren der zweiten SIP Nachricht bei einem anfänglichen AS (20), der den Anwender bedient, ausgeführt wird.

6. Verfahren nach einem vorangehenden Anspruch, wobei das Umdirigieren (303, 503) der ersten und/oder zweiten SIP Nachricht ein Erzeugen (304) der zweiten/dritten SIP Nachricht als ein SIP INVITE umfasst, das an einen anderen Anwender als den Anwender gerichtet ist, an den die erste SIP NACHRICHT gerichtet war.

7. Verfahren nach einem vorangehenden Anspruch, wobei das Umdirigieren der ersten und/oder zweiten SIP Nachricht (303, 503) eine Anwendung umfasst von einem von: einer Kommunikationsumleitung, CDIV; eines Nicht-Stören-Dienstes; eines Kommunikationsverteilungsdienstes; eines flexiblen Warndienst; eines Konferenzdienstes, oder irgendeines anderen Umleitdienstes.

8. Verfahren nach einem vorangehenden Anspruch, wobei die Informationen bezüglich der ersten, zweiten oder dritten SIP Nachricht Ladungsinformationen umfassen, wobei das Verfahren des Weiteren ein Weiterleiten (506) der Ladungsinformationen an eine Ladungsdatenfunktion, CDF, (16) oder an ein Online-Ladungssystem, OCS, gemeinsam mit der ICID und referenzierte ICID, die in der SIP Nachricht beinhaltet ist, umfasst.

9. Verfahren nach Anspruch 8, wobei die CDF (16) oder das OCS, an die bzw. das die Ladungsinformationen weitergeleitet wird, die Ladungsinformationen mit anderen empfangenen Ladungsinformationen, die eine entsprechende ICID oder referenzierte ICID enthalten, korreliert.

10. Verfahren nach einem der Ansprüche 1 bis 7, wobei das Korrelieren der Informationen bezüglich der ersten, zweiten oder dritten SIP Nachricht ein Ausführen einer Netzwerkverfolgung unter Verwendung des ICIDs in den SIP Nachrichten umfasst.

11. Verfahren nach einem vorangehenden Anspruch, wobei der erste ICID in einem ICID-Feld der ersten SIP Nachricht enthalten ist, die zweite ICID in einem ICID-Feld der zweiten SIP Nachricht enthalten ist und der Verweis auf die erste ICID in der zweiten SIP Nachricht ein Parameter ist, der nicht im ICID-Feld der zweiten SIP Nachricht spezifiziert ist.

12. IMS Netzwerkinstanz, die konfiguriert ist die Verfahrensschritte von Anspruch 1 auszuführen.

13. IMS Netzwerkinstanz nach Anspruch 11, wobei die erste ICID in einem ICID-Feld der ersten SIP Nachricht enthalten ist und die Instanz konfiguriert ist, die zweite ICID in einem ICID-Feld der zweiten SIP Nachricht zu enthalten und den Verweis auf die erste ICID in der zweiten SIP Nachricht als einen Parameter einzufügen, der nicht im ICID-Feld der zweiten SIP Nachricht spezifiziert ist.

14. IMS Netzwerkinstanz nach Anspruch 12 oder Anspruch 13, wobei die Netzwerkinstanz ein Anwendungsserver (14, 20) ist, der einen Dienst bereitstellt, der eine Umdirigierfunktion ausführt.

## Revendications

1. Procédé de corrélation d'informations se rapportant à des messages dans une session de protocole d'initiation de session SIP, le procédé comprenant :
la réception par un deuxième utilisateur de la part d'un premier utilisateur (301, 501) d'un premier message SIP pour initier une nouvelle session SIP comme première branche d'appel du premier utilisateur au deuxième utilisateur, le premier message SIP comprenant un premier identifiant de facturation IMS ICID identifiant la première branche d'appel ; **caractérisé par** :
le re-ciblage (303, 503) du premier message SIP à un troisième utilisateur en générant (304) une nouvelle branche d'appel comprenant l'envoi d'un deuxième message SIP pour initier une seconde session SIP nouvelle, le deuxième message SIP comprenant un deuxième ICID identifiant la seconde branche d'appel ;
l'insertion d'une référence au premier ICID dans le deuxième message SIP ; et
la corrélation d'informations se rapportant à la première session SIP avec des informations se rapportant à la seconde session SIP sur la base du premier ICID et à la référence au premier ICID dans le deuxième message SIP.

2. Procédé selon la revendication 1, dans lequel le re-ciblage (303, 503) du premier message SIP est effectué dans un serveur d'application (14) ou une autre entité de réseau IMS qui effectue une opération de re-ciblage desservant un utilisateur vers lequel le premier message SIP est dirigé.

3. Procédé selon la revendication 1 ou la revendication 2, comprenant en outre le re-ciblage du deuxième message SIP en générant un troisième message SIP, l'insertion d'une référence au second ICID dans le troisième message SIP et la corrélation d'informations se rapportant au deuxième et au troisième message SIP sur la base du second ICID et de la référence au second ICID dans le troisième message SIP.

4. Procédé selon la revendication 3, comprenant en outre une corrélation d'informations se rapportant au premier et au troisième message SIP sur la base du premier et du second ICID et des références au premier et au second ICID dans le deuxième et le troisième message SIP.

5. Procédé selon la revendication 3 ou la revendication 4, dans lequel le premier message SIP est dirigé vers un utilisateur et le re-ciblage (303, 503) du premier message SIP est effectué dans un serveur d'application terminal AS (14) desservant un utilisateur, tandis que le re-ciblage du deuxième message SIP est effectué dans un AS initiateur (20) desservant l'utilisateur.

6. Procédé selon l'une quelconque des revendications précédentes, dans lequel le re-ciblage (303, 503) du premier et/ou du deuxième message SIP comprend la génération (304) du deuxième/troisième message SIP comme INVITE SIP dirigé vers un utilisateur différent de l'utilisateur vers lequel le premier message SIP était dirigé.

7. Procédé selon l'une quelconque des revendications précédentes, dans lequel le re-ciblage du premier et/ou du deuxième message SIP (303, 503) comprend l'application de l'un ou l'une parmi une diversion de communication CDIV ; un service Ne pas déranger ; un service de distribution de communication ; un service d'alerte souple ; un service de conférence ou tout autre service de re-ciblage.

8. Procédé selon l'une quelconque des revendications précédentes, dans lequel les informations se rapportant au premier, au deuxième ou au troisième message SIP comprennent des informations de facturation, le procédé comprenant en outre l'acheminement (506) des informations de facturation à une fonction de données de facturation CDF (16) ou à un système de facturation en ligne OCS conjointement avec l'ICID et l'ICID référencé contenu dans le message SIP.

9. Procédé selon la revendication 8, dans lequel la CDF (16) ou l'OCS, auxquels les informations de facturation sont acheminées corrèle les informations de facturation avec d'autres informations de facturation reçues qui comprennent un ICID correspondant ou un ICID référencé.

10. Procédé selon l'une quelconque des revendications 1 à 7, dans lequel la corrélation des informations se rapportant au premier, au deuxième ou au troisième message SIP comprend la réalisation d'un tracé de réseau utilisant les ICID dans les messages SIP.

11. Procédé selon l'une quelconque des revendications précédentes, dans lequel le premier ICID est inclus dans un champ ICID du premier message SIP, le second ICID est inclus dans un champ ICID du deuxième message SIP et la référence au premier ICID dans le deuxième message SIP est un paramètre qui n'est pas spécifié dans le champ ICID du deuxième message SIP.

12. Entité de réseau IMS configurée pour effectuer les étapes de procédé de la revendication 1.

13. Entité de réseau IMS selon la revendication 11, dans laquelle le premier ICID est inclus dans un champ ICID du premier message SIP et l'entité est configurée pour inclure le second ICID dans un champ ICID du deuxième message SIP et pour insérer la référence au premier ICID dans le deuxième message SIP comme paramètre qui n'est pas spécifié dans le champ ICID du deuxième message SIP.

14. Entité de réseau IMS selon la revendication 12 ou la revendication 13, dans laquelle l'entité de réseau est un serveur d'application (14, 20) fournissant un service qui effectue une fonction de re-ciblage.
